# EUROPEAN PATENT APPLICATION

(11) **EP 4 644 015 A1**
(43) Date of publication of application: **05.11.2025**
(21) Application number: 24905106.1
(22) Date of filing: 29.03.2024
(51) Int. Cl.: B21D 28/02, B21C 51/00

(54) **ELECTRODE SHEET DIE-CUTTING METHOD AND ELECTRODE SHEET DIE-CUTTING DEVICE**

(30) Priority: 16.01.2024 CN 202410057769
(71) Applicant: Contemporary Amperex Technology Co., Limited, Ningde, Fujian 352100 (CN)
(72) Inventor: HU, Liangjin, Ningde, Fujian 352100 (CN); MA, Lin, Ningde, Fujian 352100 (CN); SHI, Dewei, Ningde, Fujian 352100 (CN); XU, Xiaowei, Ningde, Fujian 352100 (CN); ZHANG, Zili, Ningde, Fujian 352100 (CN); WANG, Xi, Ningde, Fujian 352100 (CN)
(74) Representative: Gong, Jinping
(86) International application number: PCT/CN2024/084967
(87) International publication number: WO 2025/152270

(57) **Abstract**

The present application discloses a die cutting method and apparatus for an electrode plate. The die cutting method for an electrode plate includes: providing an electrode-plate material; in a process in which a die cutting unit (120) performs die cutting on the electrode-plate material (900) to generate an electrode plate (901) having a length of a single-battery cell electrode plate, a defect detection unit performs defect detection on the electrode-plate material (900), where the electrode plate (901) having the length of the single-battery cell electrode plate is indicated by a mark (911) obtained through die cutting performed on the electrode plate (901); and in response to that the defect detection unit detects a defect (990) in the electrode-plate material (900), ending, depending on a position of the detected defect (990) on a first electrode plate on which die cutting is performed, die cutting performed on the first electrode plate, and restarting to perform die cutting on a second electrode plate.

## Description

The present application claims priority to Chinese Patent Application No. 202410057769.0, filed with the China National Intellectual Property Administration on January 16, 2024 and entitled "DIE CUTTING METHOD AND APPARATUS FOR ELECTRODE PLATE", which is incorporated herein by reference in its entirety.

### TECHNICAL FIELD

The present application relates to the field of batteries, and specifically, to a die cutting method and apparatus for an electrode plate.

### BACKGROUND

In a process of producing an electrode plate configured to form a battery cell, aspects such as an appearance and a size of the electrode plate usually need to be detected. When a defect is detected in the electrode plate, the electrode plate may be identified, to reject a defective product, thereby avoiding a bad impact on subsequent manufacture of the battery cell. With the development of the industry, a length of an electrode plate corresponding to a single battery cell (a length of a single-battery cell electrode plate) also increases. In this case, once a defect is detected in the electrode plate, even if there is only one defect, the entire electrode plate used in the battery cell may be scrapped, resulting in a serious waste.

### SUMMARY

In view of the foregoing problem, the present application provides a die cutting method and apparatus for an electrode plate, so that a waste problem caused by a defect in an electrode plate can be alleviated.

According to a first aspect, the present application provides a die cutting method for an electrode plate. The method includes: providing an electrode-plate material; in a process in which a die cutting unit performs die cutting on the electrode-plate material to generate an electrode plate having a length of a single-battery cell electrode plate, a defect detection unit performs defect detection on the electrode-plate material, where the electrode plate having the length of the single-battery cell electrode plate is indicated by a mark obtained through die cutting performed on the electrode plate; and in response to that the defect detection unit detects a defect in the electrode-plate material, ending, depending on a position of the detected defect on a first electrode plate on which die cutting is performed, die cutting performed on the first electrode plate, and restarting to perform die cutting on a second electrode plate.

In the technical solution of this embodiment of the present application, defect detection is performed on the electrode-plate material. When the defect is detected, whether resetting and re-cutting need to be performed on the electrode-plate material is determined based on the position of the defect. Die cutting performed on the first electrode plate on which die cutting is performed is ended when a condition is satisfied, and die cutting performed on the second electrode plate is restarted, that is, resetting and re-cutting are performed. Therefore, a waste of the electrode-plate material is reduced.

In some embodiments, the in response to that the defect detection unit detects a defect in the electrode-plate material, ending, depending on a position of the detected defect on a first electrode plate on which die cutting is performed, die cutting performed on the first electrode plate, and restarting to perform die cutting on a second electrode plate includes: in response to that the defect detection unit detects the defect in the electrode-plate material, determining a first distance between the defect and a preset position on the first electrode plate in a first direction, where the first direction is a moving direction of the electrode-plate material during die cutting; comparing the first distance with a preset length threshold; and when the first distance is less than the preset length threshold, ending die cutting performed on the first electrode plate, and the die cutting unit performs die cutting on the second electrode plate on the electrode-plate material.

In some embodiments, the die cutting method for an electrode plate further includes: when the first distance is greater than or equal to the preset length threshold, an identification unit performs defective product identification on the first electrode plate.

In some embodiments, the die cutting method for an electrode plate further includes: when the first distance is greater than or equal to the preset length threshold, the die cutting unit continues to perform die cutting on the electrode-plate material based on a preset die cutting parameter. The preset die cutting parameter corresponds to a die cutting parameter for a case in which no defect is detected in the electrode-plate material.

In some embodiments, the defect detection unit performs defect detection on the electrode-plate material based on shooting performed by a visual detection unit on the electrode-plate material. The visual detection unit includes a first visual detection unit located in front of the die cutting unit in the first direction. A first length threshold is used as the preset length threshold when the electrode-plate material is a single-side electrode-plate material in which a tab is obtained through die cutting on only one side perpendicular to the moving direction. The first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction.

In some embodiments, the first length threshold is equal to the total length of each electrode plate minus the distance between the preset position on the first electrode plate and the initial position of the first electrode plate in the first direction minus the distance between the first defect detection position of the first visual detection unit and the die cutting position of the die cutting unit in the first direction.

In some embodiments, the defect detection unit performs defect detection on the electrode-plate material based on shooting performed by a visual detection unit on the electrode-plate material. The visual detection unit includes a first visual detection unit located in front of the die cutting unit in the first direction. When the electrode-plate material is a two-side electrode-plate material in which tabs are obtained through die cutting on both sides perpendicular to the moving direction, the die cutting method for an electrode plate further includes: in response to that the first visual detection unit detects the defect in the electrode-plate material, the defect detection unit determines an electrode-plate material region in which the defect is located in the electrode-plate material, where the electrode-plate material includes two electrode-plate material regions, the two electrode-plate material regions are defined by a slitting line extending in the first direction in the electrode-plate material, and the two electrode-plate material regions are respectively configured to form different electrode plates; and determining the preset length threshold based on the electrode-plate material region in which the defect is located in the electrode-plate material.

In some embodiments, the determining the preset length threshold based on the electrode-plate material region in which the defect is located in the electrode-plate material includes: using the first length threshold as the preset length threshold when the defect is distributed in the two electrode-plate material regions. The first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction.

In some embodiments, the first length threshold is equal to the total length of each electrode plate minus the distance between the preset position on the first electrode plate and the initial position of the first electrode plate in the first direction minus the distance between the first defect detection position of the first visual detection unit and the die cutting position of the die cutting unit in the first direction.

In some embodiments, the die cutting unit includes a first die cutting unit and a second die cutting unit. The when the first distance is less than the preset length threshold, ending die cutting performed on the first electrode plate, and the die cutting unit performs die cutting on the second electrode plate on the electrode-plate material includes: ending, for both the two electrode-plate material regions, die cutting performed on the first electrode plate, and the first die cutting unit and the second die cutting unit respectively perform die cutting on corresponding second electrode plates.

In some embodiments, when die cutting performed in the two electrode-plate material regions of the electrode-plate material is asynchronously executable, the determining the preset length threshold based on the electrode-plate material region in which the defect is located in the electrode-plate material includes: using the first length threshold as the preset length threshold. The first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction.

In some embodiments, the first length threshold is equal to the total length of each electrode plate minus the distance between the preset position on the first electrode plate and the initial position of the first electrode plate in the first direction minus the distance between the first defect detection position of the first visual detection unit and the die cutting position of the die cutting unit in the first direction.

In some embodiments, the die cutting unit includes a first die cutting unit and a second die cutting unit. The when the first distance is less than the preset length threshold, ending die cutting performed on the first electrode plate, and the die cutting unit performs die cutting on the second electrode plate on the electrode-plate material includes: ending, in an electrode-plate material region in which the defects exists in the two electrode-plate material regions, die cutting performed on the first electrode plate, and one of the first die cutting unit and the second die cutting unit that is close to the electrode-plate material region performs die cutting on the second electrode plate in the electrode-plate material region; and one of the first die cutting unit and the second die cutting unit that is close to another electrode-plate material region in which the defects does not exist in the two electrode-plate material regions continues to perform, in the another electrode-plate material region, die cutting based on a preset die cutting parameter. The preset die cutting parameter corresponds to a die cutting parameter for a case in which no defect is detected in the electrode-plate material.

In some embodiments, when die cutting performed in the two electrode-plate material regions of the electrode-plate material is only synchronously executable, the determining the preset length threshold based on the electrode-plate material region in which the defect is located in the electrode-plate material includes: using a second length threshold as the preset length threshold when the defect is distributed in only one of the two electrode-plate material regions. The second length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction.

In some embodiments, the second length threshold is equal to a half of the total length of each electrode plate minus the distance between the preset position on the first electrode plate and the initial position of the first electrode plate in the first direction minus the distance between the first defect detection position of the first visual detection unit and the die cutting position of the die cutting unit in the first direction.

In some embodiments, the die cutting unit includes a first die cutting unit and a second die cutting unit. The when the first distance is less than the preset length threshold, ending die cutting performed on the first electrode plate, and the die cutting unit performs die cutting on the second electrode plate on the electrode-plate material includes: synchronously ending, for both the two electrode-plate material regions, die cutting performed on the first electrode plate, and the first die cutting unit and the second die cutting unit respectively perform die cutting on corresponding second electrode plates synchronously.

In some embodiments, the defect detection unit performs defect detection on the electrode-plate material based on shooting performed by a visual detection unit on the electrode-plate material. The visual detection unit includes a second visual detection unit located behind the die cutting unit in the first direction. A third length threshold is used as the preset length threshold when the electrode-plate material is a single-side electrode-plate material in which a tab is obtained through die cutting on only one side perpendicular to the moving direction. When a final position of the first electrode plate on which die cutting is performed is not between the second visual detection unit and the die cutting unit when the defect is detected, the first distance is less than the third length threshold. When the final position of the first electrode plate on which die cutting is performed is between the second visual detection unit and the die cutting unit when the defect is detected, the first distance is greater than or equal to the third length threshold.

In some embodiments, the defect detection unit performs defect detection on the electrode-plate material based on shooting performed by a visual detection unit on the electrode-plate material. The visual detection unit includes a second visual detection unit located behind the die cutting unit in the first direction. A third length threshold is used as the preset length threshold when the electrode-plate material is a two-side electrode-plate material in which tabs are obtained through die cutting on both sides perpendicular to the moving direction, and die cutting performed in two electrode-plate material regions of the electrode-plate material is asynchronously executable. The electrode-plate material includes the two electrode-plate material regions. The two electrode-plate material regions are defined by a slitting line extending in the first direction in the electrode-plate material. The two electrode-plate material regions are respectively configured to form different electrode plates. When a final position of the first electrode plate on which die cutting is performed is not between the second visual detection unit and the die cutting unit when the defect is detected, the first distance is less than the third length threshold. When the final position of the first electrode plate on which die cutting is performed is between the second visual detection unit and the die cutting unit when the defect is detected, the first distance is greater than or equal to the third length threshold.

In some embodiments, the third length threshold is equal to a total length of each electrode plate plus a distance between a second defect detection position of the second visual detection unit and a die cutting position of the die cutting unit in the first direction minus a distance between a preset position on the first electrode plate and an initial position of the first electrode plate in the first direction.

In some embodiments, the die cutting method for an electrode plate further includes: when the first distance is greater than or equal to the third length threshold, the die cutting unit continues to perform die cutting on the electrode-plate material based on a preset die cutting parameter until die cutting performed on the first electrode plate is completed, and then the die cutting unit performs die cutting on the second electrode plate on the electrode-plate material. The preset die cutting parameter corresponds to a die cutting parameter for a case in which no defect is detected in the electrode-plate material.

In some embodiments, the defect detection unit performs defect detection on the electrode-plate material based on shooting performed by a visual detection unit on the electrode-plate material. The visual detection unit includes a second visual detection unit located behind the die cutting unit in the first direction. A fourth length threshold is used as the preset length threshold when the electrode-plate material is a two-side electrode-plate material in which tabs are obtained through die cutting on both sides perpendicular to the moving direction, and die cutting performed in two electrode-plate material regions of the electrode-plate material is only synchronously executable. The electrode-plate material includes the two electrode-plate material regions. The two electrode-plate material regions are defined by a slitting line extending in the first direction in the electrode-plate material. The two electrode-plate material regions are respectively configured to form different electrode plates. The fourth length threshold is determined based on a total length of each electrode plate, a distance between a preset position on the first electrode plate and an initial position of the first electrode plate in the first direction, and a distance between a second defect detection position of the second visual detection unit and a die cutting position of the die cutting unit in the first direction.

In some embodiments, the fourth length threshold is equal to a half of the total length of each electrode plate plus the distance between the second defect detection position of the second visual detection unit and the die cutting position of the die cutting unit in the first direction minus the distance between the preset position on the first electrode plate and the initial position of the first electrode plate in the first direction.

According to a second aspect, the present application provides a die cutting apparatus for an electrode plate. The apparatus includes: a visual detection unit, configured to shoot an electrode-plate material; a defect detection unit, where the defect detection unit is communicatively connected to the visual detection unit, and the defect detection unit is configured to determine, based on an image shot by the visual detection unit, whether a defect exists in the electrode-plate material; a die cutting unit, where the die cutting unit is communicatively connected to the defect detection unit, and the die cutting unit is configured to perform die cutting on an electrode plate; and a control unit, where the control unit is communicatively connected to the defect detection unit and the die cutting unit, and the control unit is configured to: in response to that a defect is detected in the electrode-plate material, end, depending on a position of the detected defect on a first electrode plate on which die cutting is performed, die cutting performed on the first electrode plate, and restart to perform die cutting on a second electrode plate.

In the die cutting apparatus for an electrode plate of this embodiment of the present application, defect detection is performed on the electrode-plate material. When the defect is detected, whether resetting and re-cutting need to be performed on the electrode-plate material is determined based on the position of the defect. Die cutting performed on the first electrode plate is ended when a condition is satisfied, and die cutting is performed on the second electrode plate, that is, resetting and re-cutting are performed. Therefore, a waste of the electrode-plate material is reduced.

In some embodiments, the die cutting apparatus for an electrode plate further includes: an identification unit. The identification unit is communicatively connected to the defect detection unit and the control unit. The identification unit is located in front of the visual detection unit in a first direction. The identification unit is configured to perform defective product identification on an electrode plate.

In some embodiments, the visual detection unit includes at least one of the followings: a first visual detection unit, where the first visual detection unit is located in front of the die cutting unit in the first direction; and a second visual detection unit, where the second visual detection unit is located behind the die cutting unit in the first direction.

In some embodiments, the die cutting apparatus for an electrode plate further includes: a slitting unit. The slitting unit is located in front of the visual detection unit in the first direction, and the slitting unit is configured to slit, along a slitting line extending in the first direction in the electrode-plate material, two electrode-plate material regions included in the electrode-plate material. The two electrode-plate material regions are respectively configured to form different electrode plates.

In some embodiments, the die cutting unit includes a first die cutting unit and a second die cutting unit. The first die cutting unit and the second die cutting unit are respectively located at two ends in a second direction perpendicular to the first direction.

The above descriptions only refer to an overview of the technical solution of the present application. To understand the technical means of the present application more clearly, it can be implemented according to the content of the descriptions. To make the foregoing and other objectives, features and advantages of the present application more apparent, the specific implementations of the present application are listed below.

### BRIEF DESCRIPTION OF THE DRAWINGS

Various other advantages and benefits will become apparent to those of ordinary skill in the art upon reading the following detailed descriptions of the preferred implementations. The accompanying drawings are only for the purpose of illustrating the preferred implementations and are not construed as limiting the present application. In addition, in all the accompanying drawings, same parts are indicated by the same reference numerals. In the accompanying drawings:
FIG. 1 is a schematic diagram of a structure of an electrode plate according to some embodiments of the present application;
FIG. 2 is a schematic diagram of structures of a die cutting apparatus for an electrode plate and an electrode plate according to some embodiments of the present application;
FIG. 3 is a schematic diagram of structures of a die cutting apparatus for an electrode plate and an electrode plate according to some other embodiments of the present application;
FIG. 4 is a schematic diagram of structures of a die cutting apparatus for an electrode plate and an electrode plate according to some still other embodiments of the present application;
FIG. 5 is a schematic diagram of structures of a die cutting apparatus for an electrode plate and an electrode plate according to some yet other embodiments of the present application;
FIG. 6 is a schematic flowchart of a die cutting method for an electrode plate according to some embodiments of the present application;
FIG. 7 is a schematic partial flowchart of a die cutting method for an electrode plate according to some embodiments of the present application; and
FIG. 8 is a schematic partial flowchart of a die cutting method for an electrode plate according to some other embodiments of the present application.

Reference numerals in the specific implementations are as follows:
900: electrode-plate material; 901: electrode plate; 901a: first electrode-plate material region; 901b: second electrode-plate material region; 910: tab; 911: mark; 990: defect;
110: first visual detection unit; 120: die cutting unit; 121: first die cutting unit; 122: second die cutting unit; 130: control unit; 140: identification unit; 150: second visual detection unit; and 160: slitting unit.

### DETAILED DESCRIPTION

Embodiments of the technical solutions of the present application will be described in detail below with reference to the accompanying drawings. The following embodiments are only used to illustrate the technical solutions of the present application more explicitly, and are thus only interpreted as examples, rather than used to limit the protection scope of the present application.

Unless otherwise defined, all technical and scientific terms used herein have the same meaning as commonly understood by those skilled in the technical filed to which the present application belongs. The terminology used herein is for the purpose of describing particular embodiments only and is not intended to limit the present application. The terms "comprising" and "having" and any variations thereof in the description and claims of the present application and the above description of the accompanying drawings are intended to cover non-exclusive inclusions.

In the descriptions of the embodiments of the present application, the technical terms "first", "second", and the like are only used to distinguish different objects, and should not be understood as indicating or implying relative importance or implying the number, specific order or primary and secondary relationship of indicated technical features. In the description of the embodiments of the present application, "a plurality of" means two or more, unless otherwise expressly and specifically defined.

Reference in this specification to "an embodiment" means that a specified feature, structure, or characteristic described with reference to the embodiment may be included in at least one embodiment of the present application. Appearances of the phrase in various locations in this specification are not necessarily all referring to a same embodiment, nor are separate or alternative embodiments mutually exclusive of another embodiment. It is explicitly and implicitly understood by a person skilled in the art that embodiments described in this specification may be combined with another embodiment.

In the descriptions of the present application, the term "and/or" is merely an association to describe the associated objects. It can mean that there are three kinds of relationships, such as A and/or B, which means that A exists alone, A and B exist at the same time, and B exists alone. In addition, in this specification, the character "/" usually indicates an "or" relationship between the associated objects.

In the descriptions of the embodiments of the present application, the term "a plurality of" means two or more (including two). Similarly, "a plurality of groups" means two or more groups (including two groups), and "a plurality of pieces" means two or more pieces (including two pieces).

In the descriptions of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the present application and simplifying the descriptions, rather than indicating or implying that the involved device or element should have a specific orientation or should be configured or operated in the specific orientation, therefore, they cannot be understood as limiting the present application.

In the descriptions of the embodiments of the present application, unless otherwise expressly specified and defined, the technical terms "installed", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For those of ordinary skill in the art, the specific meanings of the above terms in the present application may be interpreted according to specific situations.

Nowadays, from the perspective of development of the market situation, power batteries (for example, lithium batteries) are more widely applied. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of traction batteries, market demands for traction batteries are also expanding.

Regardless of whether a battery cell in the power battery is produced based on a winding process or a laminating process, aspects such as an appearance and a size of an electrode plate used in the battery cell need to be detected in advance. When a defect is detected in the electrode plate, the electrode plate may be identified, so that a defective product is rejected by recognizing an identifier by a subsequent process device before the electrode plate is produced into the battery cell, thereby avoiding a bad impact on production of the battery cell. With the development of the industry, consumers have an increasingly high requirement on endurance of batteries. To satisfy a requirement for long endurance, with the optimization and development of technologies, a length of an electrode plate corresponding to a single battery cell (that is, a length of a single-battery cell electrode plate or an EA length of the electrode plate) also increases, for example, increases from approximately 5 meters initially to approximately 30 meters currently. In addition, to ensure safety of the batteries, if a defect is detected in the electrode plate, even if there is only one defect, the entire electrode plate having the EA length may need to be scrapped, very easily resulting in a serious waste.

To avoid the problem of scrapping of the entire electrode plate due to the single defect, in a process in which die cutting is performed on an electrode-plate material to form the electrode plate, resetting and re-cutting may be automatically performed based on detection of the defect in the electrode plate, to save materials, so that production costs are reduced, and production efficiency is improved. Therefore, the present application provides a die cutting method and apparatus for an electrode plate.

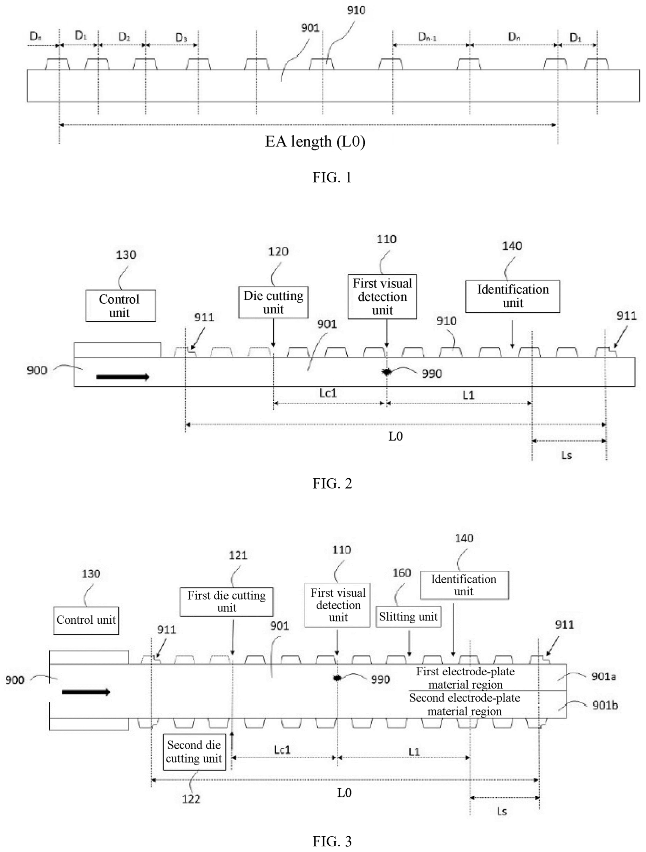

As shown in FIG. 1, an electrode plate 901 configured to manufacture a battery cell may be formed by performing die cutting on an electrode-plate material. During die cutting, the electrode-plate material may move in a direction from left (which is also referred to as rear in this specification) to right (which is also referred to as front in this specification) shown in FIG. 1, and a tab 910 is obtained through cutting performed by a die cutting unit at a corresponding position of the electrode-plate material. The tab 910 may be a conductive body that leads positive and negative electrodes from the battery cell, to use the positive and negative electrodes as contact points during charging and discharging of a battery. As shown in FIG. 1, a plurality of tabs 910 may be included within a range of an electrode plate corresponding to a single battery cell (that is, within a range of a length or an EA length of a single-battery cell electrode plate). A distance between the tabs 910 may be set differently based on whether the battery cell is prepared based on a winding process or a laminating process. For example, when the battery cell is prepared based on the winding process, a distance between every two adjacent tabs 910 in the electrode plate 901 may be different. This is because a distance between tabs 910 in a region farther away from a winding center in the electrode plate 901 needs to be set larger as the winding process is performed, to implement expected alignment of the tabs 910. In the embodiment shown in FIG. 1, within a single EA length, distances D1, D2, D3, ..., Dn-1, and Dn between two adjacent tabs 910 may satisfy D1<D2<D3<...<Dn-1<Dn, that is, left regions of the electrode plate 901 in FIG. 1 may be wound inside right regions of the electrode plate 901, to form the battery cell. It may be understood that, when die cutting continues to be performed on a subsequent electrode plate (that is, a leftmost electrode plate shown in FIG. 1), distances between the tabs 910 start from Dn again, and the distances change according to a trend of Dn-1, ..., D3, D2, and D1. In addition, when the battery cell is prepared based on the laminating process, a distance between every two adjacent tabs 910 in the electrode plate may be equal, or another expected manner of setting the distance may be used as required. This is not limited herein. In conclusion, in a process in which the tab in the electrode plate is formed by performing die cutting on the electrode-plate material, because the distance between two adjacent tabs in the same electrode plate may be different, once a defect exists in the electrode plate, the entire electrode plate may be scrapped regardless of a quantity and position of the defect, and a part of regions of the electrode plate that are intact cannot be fully used. However, in the present application, this problem is expected to be resolved in a manner of resetting and re-cutting.

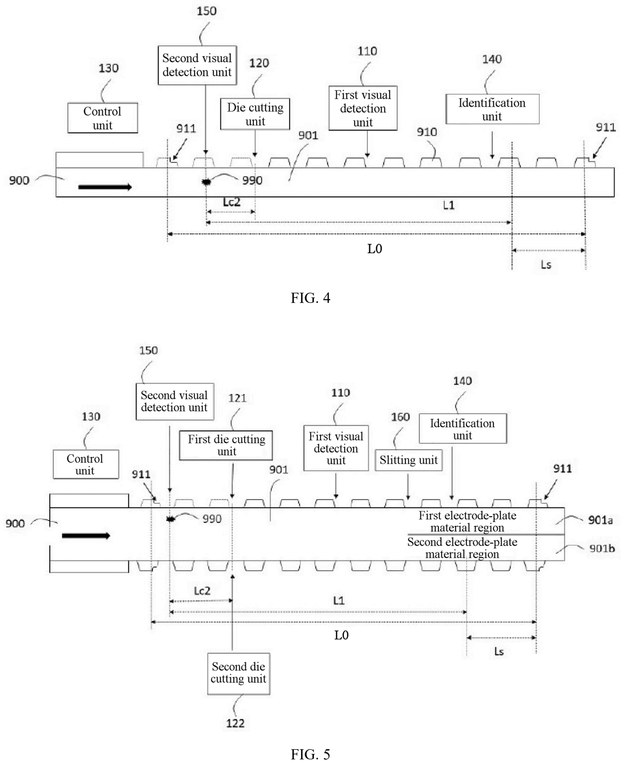

In an example embodiment of the present application, as shown in FIG. 2 to FIG. 5, a die cutting apparatus for an electrode plate may include a visual detection unit (a first visual detection unit 110 in FIG. 2 to FIG. 5 and/or a second visual detection unit 150 in FIG. 4 and FIG. 5), a defect detection unit, a die cutting unit (a die cutting unit 120 in FIG. 2 and the figure, or a first die cutting unit 121 and a second die cutting unit 122 in FIG. 3 and FIG. 5), and a control unit 130. As further described in detail below, the die cutting apparatus for an electrode plate may be configured to implement the die cutting method for an electrode plate of the present application. It should be noted that both the first visual detection unit 110 and the second visual detection unit 150 are shown in FIG. 4 and FIG. 5. However, it may be understood that only one of the first visual detection unit 110 and the second visual detection unit 150 may alternatively be disposed in the die cutting apparatus for an electrode plate as required.

The visual detection unit may be configured to shoot an electrode-plate material. The defect detection unit may be communicatively connected to the visual detection unit, and the defect detection unit may be configured to determine, based on an image shot by the visual detection unit, whether a defect exists in the electrode-plate material 900. In some embodiments, as shown in FIG. 2 to FIG. 5, the visual detection unit may include the first visual detection unit 110, and a shooting position thereof is indicated by an arrow below the first visual detection unit 110. In some other embodiments, as shown in FIG. 4 and FIG. 5, the visual detection unit may include the second visual detection unit 150, and a shooting position thereof is indicated by an arrow below the second visual detection unit 150. As the electrode-plate material moves in a direction from left (rear) to right (front), the visual detection unit may shoot an entire electrode plate. The visual detection unit may usually shoot only a front surface (that is, a surface shown in FIG. 2 to FIG. 5) of the electrode plate. However, it may be understood that, as required, the visual detection unit may alternatively shoot only a back surface of the electrode plate, or shoot two surfaces, namely, the front surface and the back surface, of the electrode plate. In some embodiments, the visual detection unit may include, for example, a charge-coupled device (CCD) camera, which can shoot a to-be-detected surface of the electrode-plate material 900. The defect detection unit may be communicatively connected to either of the first visual detection unit 110 and the second visual detection unit 150. In addition, the defect detection unit may include, for example, a processor, and analyze the image shot by the visual detection unit to determine whether a defect exists in the electrode-plate material.

The die cutting unit 120 may be communicatively connected to the defect detection unit. For example, the die cutting unit 120 may be directly communicatively connected to the defect detection unit, or may be communicatively connected to the defect detection unit via the control unit 130 described below. The die cutting unit 120 may be located behind the first visual detection unit 110 (or on a left side shown in FIG. 2 to FIG. 5) in a first direction. The first direction is a moving direction of the electrode-plate material 900 during die cutting. In addition, the die cutting unit 120 may be located in front of the second visual detection unit 150 (or on a right side shown in FIG. 4 and FIG. 5). The die cutting unit 120 may be configured to perform die cutting on the electrode plate 901. In the example embodiment shown in FIG. 2 to FIG. 5, a position at which the die cutting unit 120 performs die cutting on the electrode-plate material 900 may be indicated by an arrow corresponding to the die cutting unit 120 (or the first die cutting unit 121 and the second die cutting unit 122). In other words, in the example embodiment shown in FIG. 2 to FIG. 5, the electrode-plate material 900 may move from left to right, and sequentially pass through the second visual detection unit 150 that may exist, the die cutting unit 120, and the first visual detection unit 110 that may exist. The die cutting unit 120 may first perform die cutting on the electrode-plate material 900, to form a structure such as a tab 910, and then the first visual detection unit 110 and the defect detection unit perform shooting and defect detection on the electrode-plate material 900 after die cutting, to determine whether a defect exists in the electrode plate 901 obtained through die cutting. In addition, before the die cutting unit 120 performs die cutting on the electrode-plate material 900, the second visual detection unit 150 and the defect detection unit may alternatively perform shooting and defect detection on the electrode-plate material 900 in advance before die cutting.

In some embodiments, as shown in FIG. 2 and FIG. 4, the die cutting apparatus for an electrode plate may be configured to perform die cutting on a single-side electrode-plate material, and a tab is obtained through die cutting on only one side perpendicular to the first direction in the single-side electrode-plate material. The die cutting unit 120 may be disposed close to the side on which the tab needs to be obtained through cutting.

In some other embodiments, as shown in FIG. 3 and FIG. 5, the die cutting apparatus for an electrode plate may be configured to perform die cutting on a two-side electrode-plate material. In the two-side electrode-plate material, tabs need to be obtained through die cutting on both sides perpendicular to the first direction, and then the electrode-plate material may be cut into two parts along a slitting line extending in the first direction, to respectively from corresponding electrode plates. Correspondingly, in some embodiments, the die cutting unit may include the first die cutting unit 121 and the second die cutting unit 122. The first die cutting unit 121 and the second die cutting unit 122 may be respectively located at two ends in a second direction perpendicular to the first direction, that is, respectively disposed close to two edge regions of the electrode-plate material 900 that extend in the first direction, to perform die cutting on the two-side electrode-plate material, thereby helping improve die cutting efficiency. In some embodiments, the first die cutting unit 121 and the second die cutting unit 122 may be asynchronously run, that is, respectively controlled to perform die cutting on corresponding electrode-plate material regions. In some other embodiments, to simplify a control manner, alternatively, the first die cutting unit 121 and the second die cutting unit 122 may only be synchronously run, that is, die cutting performed on the two electrode-plate material regions is jointly controlled, and die cutting is synchronously performed or stopped.

As shown in FIG. 2 to FIG. 5, the die cutting apparatus for an electrode plate may further include the control unit 130. The control unit 130 may be communicatively connected to the defect detection unit and the die cutting unit 120. In some embodiments, the control unit 130 may be disposed independently of other components of the die cutting apparatus for an electrode plate. Alternatively, the control unit 130 may be integrated with other components of the die cutting apparatus for an electrode plate, for example, integrated with the defect detection unit, the visual detection unit, the die cutting unit 120, or the like. The control unit 130 may be configured to: in response to that a defect is detected in the electrode-plate material 900, end, depending on a position of the detected defect on a first electrode plate on which die cutting is performed, die cutting performed on the first electrode plate, and restart to perform die cutting on a second electrode plate. For example, the control unit 130 may be configured to determine a first distance that is between the defect and a preset position on the first electrode plate on which die cutting is performed when the defect is detected and that is in the first direction, compare the first distance with a preset length threshold, and control, when the first distance is less than the preset length threshold, the die cutting unit 120 to end die cutting performed on the first electrode plate, and control the die cutting unit 120 to perform die cutting on the second electrode plate different from the first electrode plate on the electrode-plate material 900, that is, perform resetting and re-cutting on the electrode-plate material when a preset condition is satisfied, to avoid a waste of the electrode-plate material, as described in detail in the following part about the die cutting method for an electrode plate.

In some embodiments, the control unit 130 may include a processor and a memory, to participate in implementing the die cutting method for an electrode plate described in detail below.

The processor may perform various actions and processing according to instructions stored in the memory. Specifically, the processor may be an integrated circuit chip, and has a signal processing capability. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods, steps, and logic block diagrams that are disclosed in the embodiments of the present disclosure. The general-purpose processor may be a microprocessor, or the processor may be any conventional processor or the like, and may be an X86 architecture or an ARM architecture.

The memory may store executable instructions. When the instructions are executed by the processor, the die cutting method for an electrode plate described in this specification is implemented. The memory may be a volatile memory or a non-volatile memory, or may include both a volatile memory and a non-volatile memory. The non-volatile memory may be a read-only memory (ROM), a programmable read-only memory (PROM), an electrically programmable read-only memory (EPROM), an electrically erasable programmable read-only memory (EEPROM), or a flash memory. The volatile memory may be a random access memory (RAM), and is used as an external cache. Through example but not limitative description, many forms of RAMs may be used, for example, a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchlink dynamic random access memory (SLDRAM), and a direct rambus random access memory (DR RAM). It should be noted that the memory involved in the method described in this specification is intended to include, but is not limited to, these memories and a memory of any other suitable type.

In some embodiments, as shown in FIG. 2 to FIG. 5, the die cutting apparatus for an electrode plate may further include an identification unit 140. The identification unit 140 may be communicatively connected to the defect detection unit and the control unit 130. The identification unit 140 may be located in front of the visual detection unit, for example, located in front of the first visual detection unit 110 (that is, on a right side shown in FIG. 2 to FIG. 5), in the first direction. The identification unit 140 may be configured to perform defective product identification on an electrode plate, so that a subsequent process device recognizes and rejects a defective product through identification, to avoid a bad impact on manufacture of the battery cell. It may be understood that, for example, the identification unit 140 may identify, in a plurality of identification manners including a visual identifier, the electrode plate in which the defect exists. This is not limited herein.

In some embodiments, a position at which the second visual detection unit 150 is disposed may be not limited or slightly limited by the die cutting unit 120, so that the second visual detection unit 150 is closer to the die cutting unit 120 than the first visual detection unit 110, to conveniently determine whether resetting and re-cutting need to be performed, as described in detail below in the die cutting method for an electrode plate.

In some embodiments, especially, in the die cutting apparatus for an electrode plate configured to process the two-side electrode-plate material, as shown in FIG. 3 and FIG. 5, the die cutting apparatus for an electrode plate may further include a slitting unit 160. The slitting unit 160 may be located in front of the visual detection unit, for example, in front of the first visual detection unit 110 (for example, located between the first visual detection unit 110 and the identification unit 140), in the first direction, and a position at which the slitting unit 160 slits the electrode plate is indicated by a corresponding arrow. The slitting unit 160 may be configured to slit, along a slitting line extending in the first direction in the electrode-plate material 900, a first electrode-plate material region 901a and a second electrode-plate material region 901b that are included in the electrode-plate material 900, so that the two electrode-plate material regions may be respectively configured to form corresponding electrode plates.

The present application further provides a die cutting method for an electrode plate. In some embodiments, the foregoing described die cutting apparatus for an electrode plate may be configured to implement the die cutting method for an electrode plate of the present application, or another apparatus may be configured to implement the die cutting method for an electrode plate of the present application. This is not limited herein.

In an example embodiment of the present application, as shown in FIG. 2 to FIG. 6, the die cutting method for an electrode plate may include the following steps:
Step S601: Provide an electrode-plate material.
Step S602: In a process in which a die cutting unit performs die cutting on the electrode-plate material to generate an electrode plate having a length of a single-battery cell electrode plate, a defect detection unit performs defect detection on the electrode-plate material.
Step S603: In response to that the defect detection unit detects a defect in the electrode-plate material, end, depending on a position of the detected defect on a first electrode plate on which die cutting is performed, die cutting performed on the first electrode plate, and restart to perform die cutting on a second electrode plate.

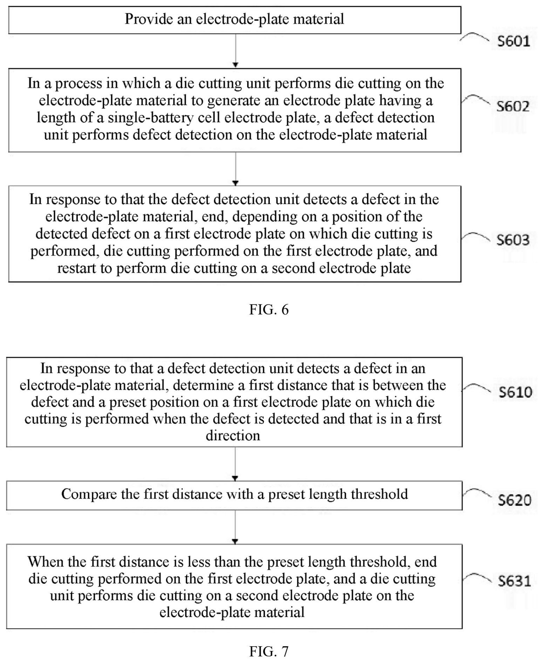

The electrode plate having the length of the single-battery cell electrode plate may be indicated by a mark obtained through die cutting performed on the electrode plate. In some embodiments, as shown in FIG. 7, the in response to that the defect detection unit detects a defect in the electrode-plate material, end, depending on a position of the detected defect on a first electrode plate on which die cutting is performed, die cutting performed on the first electrode plate, and restart to perform die cutting on a second electrode plate may specifically include: Step S610: In response to that the defect detection unit detects the defect 990 in the electrode-plate material 900, determine a first distance L1 that is between the defect 990 and a preset position on the first electrode plate on which die cutting is performed when the defect 990 is detected and that is in a first direction. Step S620: Compare the first distance L1 with a preset length threshold. Step S631: When the first distance L1 is less than the preset length threshold, end die cutting performed on the first electrode plate, and the die cutting unit performs die cutting on the second electrode plate on the electrode-plate material.

As described above, the first direction is a moving direction of the electrode-plate material during die cutting, that is, a direction from left to right shown in FIG. 2 to FIG. 5. In some embodiments, the first visual detection unit 110 may be located in front of the die cutting unit 120 (that is, on the right side shown in FIG. 2 to FIG. 5) in the first direction. Whether to end die cutting performed on the first electrode plate and perform die cutting on the second electrode plate may be determined based on whether the electrode-plate material can be effectively saved by performing resetting and re-cutting (that is, restarting to perform die cutting on a new electrode plate), for example, may be determined based on a result of comparing the first distance L1 with the preset length threshold. In some embodiments, the first distance may be determined based on a quantity of photographs shot by the visual detection unit in a period in which the defect is detected and a previous mark on the electrode plate is detected. The first distance L1 may reflect a length of a part of the electrode plate on which die cutting has been currently completed, and is further used to determine whether the electrode-plate material can be saved when resetting and re-cutting are performed in this case. Alternatively, in some other embodiments, the first distance L1 may be determined in another manner. This is not limited herein. In addition, the preset length threshold may be determined depending on a specific die cutting manner for the electrode plate and/or a process requirement for saving the electrode-plate material. When the first distance L1 is less than the preset length threshold, die cutting performed on the first electrode plate is ended, and die cutting is performed on another second electrode plate different from the first electrode plate, to save the electrode-plate material. A manner of determining the first distance L1 and the preset length threshold is further described in detail below. In addition, as described above, that the die cutting unit 120 performs die cutting on the electrode plate on the electrode-plate material 900 may specifically include: The die cutting unit 120 performs cutting at preset intervals in an edge region extending in the first direction on the electrode-plate material 900, to form a tab 910 of the electrode plate 901. In some embodiments, as shown in FIG. 2 to FIG. 5, that the die cutting unit 120 performs die cutting on the electrode plate on the electrode-plate material 900 may further include: The die cutting unit 120 performs cutting on at least one of an initial tab 910 and a last tab 910 of the electrode plate 901, to form a mark 911 of the electrode plate. The mark 911 may be used to determine a start and an end of the electrode plate 901 in a subsequent manufacture process of the battery cell, to help correctly manufacture the battery cell.

In some embodiments, as shown in FIG. 2 to FIG. 5 and FIG. 8, the die cutting method for an electrode plate may further include: Step S632: When the first distance is greater than or equal to the preset length threshold, an identification unit 140 performs defective product identification on the first electrode plate. In this way, in a process of manufacturing the battery cell, a subsequent process device may reject, based on defective product identification, an electrode plate in which a defect exists, to ensure reliability of manufacturing the battery cell.

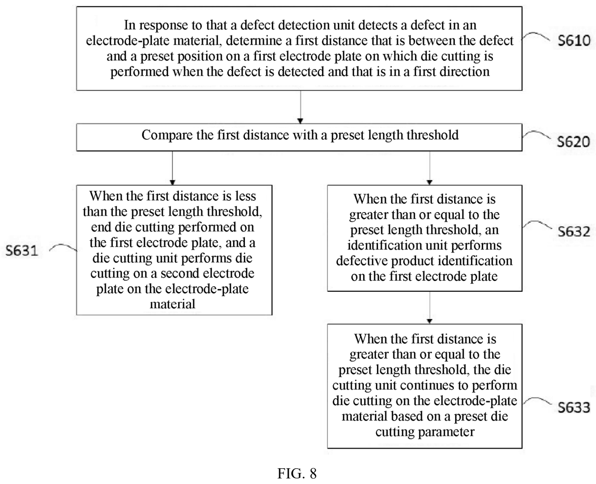

In some embodiments, as shown in FIG. 2 to FIG. 5 and FIG. 8, the die cutting method for an electrode plate may further include: Step S633: When the first distance L1 is greater than or equal to the preset length threshold, the die cutting unit 120 continues to perform die cutting on the electrode-plate material based on a preset die cutting parameter. The preset die cutting parameter may correspond to a die cutting parameter for a case in which no defect is detected in the electrode-plate material 900. In other words, when the first distance is greater than or equal to the preset length threshold, it indicates that resetting and re-cutting do not need to be performed, or resetting and re-cutting can only be performed until die cutting performed on the first electrode plate ends. In this case, the original die cutting process may be continued. It may be understood that, in some embodiments, a sequence of step S632 and step S633 may not be limited to a sequence shown in FIG. 8, and may be sequentially performed, or may be simultaneously performed, or only one of step S632 and step S633 may be performed. This is not limited herein.

The following specifically describes how to determine the first distance and the preset length threshold based on a property of the electrode-plate material and a die cutting manner for the electrode plate, and correspondingly perform the operation of resetting and re-cutting.

In some embodiments, as shown in FIG. 2, when the electrode-plate material is a single-side electrode-plate material, a first length threshold Lt1 may be used as the preset length threshold. For example, the first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction. In some embodiments, the first length threshold Lt1 is equal to the total length L0 of each electrode plate (that is, an EA length of the electrode plate) minus the distance Ls between the preset position on the first electrode plate and the initial position of the first electrode plate in the first direction minus the distance Lc1 between the first defect detection position of the first visual detection unit 110 and the die cutting position of the die cutting unit 120 in the first direction, that is, Lt1=L0-Ls-Lc1. The preset position on the first electrode plate may be selected as required, and can be calculated provided that the distance between the preset position and the initial position of the first electrode plate in the first direction is known. When the preset position is located in front of the defect 990, L1 is a positive value. When the preset position is located behind the defect 990, L1 is a negative value. In a specific example, for ease of calculation, the initial position of the first electrode plate (for example, an initial position represented by a rightmost tab 910 with a mark 911 in the first electrode plate, or an initial position of the 1^{st} tab of the first electrode plate in the first direction) may be used as the preset position on the first electrode plate. In this case, Ls=0, that is, the foregoing formula becomes Lt1=L0-Lc1. However, it may be understood that, in some other embodiments, another location that is convenient to be positioned on the electrode plate may alternatively be used as the preset position. In this case, Ls≠0. However, the first length threshold can still be determined according to Lt1=L0-Ls-Lc1.

As shown in FIG. 2, when L1<Ltl, die cutting performed on the first electrode plate may be ended, and the die cutting unit 120 performs die cutting on the second electrode plate on the electrode-plate material. In comparison with a case in which resetting and re-cutting are not performed, a length of the electrode-plate material of Lt1-L1 can be saved. In addition, when L1≥Lt1, it indicates that, in this case, die cutting performed on the first electrode plate has been completed (for example, die cutting performed on the last tab 910 of the first electrode plate and the mark 911 on the tab 910 has been completed). Therefore, resetting and re-cutting do not need to be performed, the original die cutting process may be continued, and defective product marking may be performed on the first electrode plate for subsequent rejection.

In some embodiments, as shown in FIG. 3, when the electrode-plate material is a two-side electrode-plate material, the die cutting method for an electrode plate may further include: In response to that the first visual detection unit 110 detects the defect 990 in the electrode-plate material 900, the defect detection unit determines an electrode-plate material region in which the defect 990 is located in the electrode-plate material 900; and determines the preset length threshold based on the electrode-plate material region in which the defect 990 is located in the electrode-plate material 900. The electrode-plate material 900 may include two electrode-plate material regions, namely, the first electrode-plate material region 901a and the second electrode-plate material region 901b that are shown in FIG. 3. The two electrode-plate material regions may be defined by a slitting line extending in the first direction in the electrode-plate material 900. In other words, the two electrode-plate material regions may be arranged in a second direction perpendicular to the first direction. In this way, the two electrode-plate material regions may be respectively configured to form different electrode plates.

When the electrode-plate material is the two-side electrode-plate material, the corresponding preset length threshold may be determined based on a distribution situation of the defect and whether the die cutting apparatus for an electrode plate can perform asynchronous die cutting.

Specifically, in some embodiments, the determining the preset length threshold based on the electrode-plate material region in which the defect 990 is located in the electrode-plate material 900 may include: Use the first length threshold Lt1 as the preset length threshold when the defect 990 is distributed in the two electrode-plate material regions. For example, the first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction. In some embodiments, the first length threshold Lt1 is equal to the total length L0 of each electrode plate (that is, an EA length of the electrode plate) minus the distance Ls between the preset position on the first electrode plate and the initial position of the first electrode plate in the first direction minus the distance Lc1 between the first defect detection position of the first visual detection unit 110 and the die cutting position of the die cutting unit 120 in the first direction, that is, Lt1=L0-Ls-Lc1. In other words, when the defect 990 is distributed in the two electrode-plate material regions, whether the die cutting apparatus for an electrode plate can perform asynchronous die cutting may not be considered. Because neither of the two parts of the electrode-plate material on which the defect exists can continue to be used, this case is similar to the case of the single-side electrode-plate material. Therefore, the first length threshold may be similarly used as the preset length threshold, and a length of the electrode-plate material of Lt1-L1 is saved when L1<Lt1.

Further, as shown in FIG. 3, the die cutting unit may include a first die cutting unit 121 and a second die cutting unit 122. The when the first distance is less than the preset length threshold, end die cutting performed on the first electrode plate, and the die cutting unit performs die cutting on the second electrode plate on the electrode-plate material may include: End, for both the two electrode-plate material regions, die cutting performed on the first electrode plate, and the first die cutting unit 121 and the second die cutting unit 122 respectively perform die cutting on corresponding second electrode plates. To be specific, the first die cutting unit 121 and the second die cutting unit 122 may respectively perform die cutting in regions close to edges on sides of the electrode-plate material, to obtain tabs 910 of the corresponding electrode plate.

In some other embodiments, when die cutting performed in the two electrode-plate material regions of the electrode-plate material 900 is asynchronously executable, the determining the preset length threshold based on the electrode-plate material region in which the defect 990 is located in the electrode-plate material 900 may include: Use the first length threshold Lt1 as the preset length threshold. For example, the first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction. In some embodiments, the first length threshold Lt1 is equal to the total length L0 of each electrode plate minus the distance Ls between the preset position on the first electrode plate and the initial position of the first electrode plate in the first direction minus the distance Lc1 between the first defect detection position of the first visual detection unit and the die cutting position of the die cutting unit in the first direction, that is, Lt1=L0-Ls-Lc1. In other words, when asynchronous die cutting can be implemented, the case of the electrode-plate material region in which the defect exists is similar to the case of the single-side electrode-plate material, and the first length threshold Lt1 may be used as the preset length threshold. Correspondingly, when L1<Lt1, a length of the electrode-plate material of Lt1-L1 can be saved.

Further, when die cutting performed in the two electrode-plate material regions of the electrode-plate material 900 is asynchronously executable, and the die cutting unit includes a first die cutting unit 121 and a second die cutting unit 122, the when the first distance is less than the preset length threshold, end die cutting performed on the first electrode plate, and the die cutting unit performs die cutting on the second electrode plate on the electrode-plate material may include: End, in an electrode-plate material region in which the defects exists in the two electrode-plate material regions, die cutting performed on the first electrode plate, and one of the first die cutting unit 121 and the second die cutting unit 122 that is close to the electrode-plate material region performs die cutting on the second electrode plate in the electrode-plate material region; and one of the first die cutting unit 121 and the second die cutting unit 122 that is close to another electrode-plate material region in which the defects does not exist in the two electrode-plate material regions continues to perform, in the another electrode-plate material region, die cutting based on a preset die cutting parameter. The preset die cutting parameter corresponds to a die cutting parameter for a case in which no defect is detected in the electrode-plate material. In other words, in the electrode-plate material region in which the defect exists, the corresponding die cutting unit may perform resetting and re-cutting, and in the electrode-plate material region in which no defect exists, the other die cutting unit may continue to perform die cutting according to the original die cutting program.

In some embodiments, when die cutting performed in the two electrode-plate material regions of the electrode-plate material 900 is only synchronously executable, the determining the preset length threshold based on the electrode-plate material region in which the defect is located in the electrode-plate material may include: Use a second length threshold Lt2 as the preset length threshold when the defect is distributed in only one of the two electrode-plate material regions. For example, the second length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction. In some embodiments, the second length threshold Lt2 is equal to a half of the total length L0 of each electrode plate minus the distance Ls between the preset position on the first electrode plate and the initial position of the first electrode plate in the first direction minus the distance Lc1 between the first defect detection position of the first visual detection unit 110 and the die cutting position of the die cutting unit 120 in the first direction, that is, Lt2=L0/2-Ls-Lc1. Because die cutting can only be synchronously performed in the two electrode-plate material region, a waste of performing resetting and re-cutting in the electrode-plate material region in which no defect exists needs to be considered, to determine the preset length threshold. The second length threshold Lt2 used as the preset length threshold satisfies Lt2=L0/2-Ls-Lc1, and is usually not equal to the first length threshold Lt1.

Correspondingly, the when the first distance is less than the preset length threshold, end die cutting performed on the first electrode plate, and the die cutting unit performs die cutting on the second electrode plate on the electrode-plate material may include: Synchronously end, for both the two electrode-plate material regions, die cutting performed on the first electrode plate, and the first die cutting unit 121 and the second die cutting unit 122 respectively performs die cutting on corresponding second electrode plates synchronously.

In some embodiments, as shown in FIG. 4 and FIG. 5, the defect detection unit may include the second visual detection unit 150 located behind the die cutting unit, to determine in advance, in combination with the defect detection unit before the die cutting unit 120 performs die cutting on the electrode plate, whether the defect exists in the electrode-plate material 900, so that resetting and re-cutting are performed earlier, thereby reducing a waste of the electrode-plate material 900.

In some embodiments, as shown in FIG. 4, a third length threshold Lt3 may be used as the preset length threshold when the electrode-plate material 900 is a single-side electrode-plate material. When a final position of the first electrode plate on which die cutting is performed is not between the second visual detection unit 150 and the die cutting unit 120 when the defect 990 is detected, that is, the final position of the first electrode plate (for example, a mark 911 on the left side in FIG. 4) does not reach a second defect detection position of the second visual detection unit 150, it indicates that the defect 990 exists on the first electrode plate. Therefore, the third length threshold should be set to enable the first distance L1 to be less than the third length threshold. In this case, resetting and re-cutting should be immediately performed, to avoid a waste of the length of the electrode plate caused by the defect 990. Alternatively, when the final position of the first electrode plate on which die cutting is performed is between the second visual detection unit 150 and the die cutting unit 120 when the defect 990 is detected, it indicates that, in this case, the detected defect 990 is not located on the first electrode plate on which die cutting is performed. Therefore, the third length threshold should be set to enable the first distance L1 to be greater than or equal to the third length threshold, so that die cutting performed on the intact first electrode plate can be completed, to avoid a waste of the length of the electrode plate.

Similarly, as shown in FIG. 5, a third length threshold may be used as the preset length threshold when the electrode-plate material 900 is a two-side electrode-plate material, and die cutting performed in two electrode-plate material regions of the electrode-plate material is asynchronously executable. When a final position of the first electrode plate on which die cutting is performed is not between the second visual detection unit 150 and the die cutting unit 120 when the defect 990 is detected, that is, the final position of the first electrode plate (for example, a mark 911 on the left side in FIG. 4) does not reach a second defect detection position of the second visual detection unit 150, it indicates that the defect 990 exists on the first electrode plate. Therefore, the third length threshold should be set to enable the first distance L1 to be less than the third length threshold. In this case, resetting and re-cutting should be immediately performed, to avoid a waste of the length of the electrode plate caused by the defect 990. Alternatively, when the final position of the first electrode plate on which die cutting is performed is between the second visual detection unit 150 and the die cutting unit 120 when the defect 990 is detected, it indicates that, in this case, the detected defect 990 is not located on the first electrode plate on which die cutting is performed. Therefore, the third length threshold should be set to enable the first distance L1 to be greater than or equal to the third length threshold, so that die cutting performed on the intact first electrode plate can be completed, to avoid a waste of the length of the electrode plate. For example, when the first distance is greater than or equal to the third length threshold, the die cutting unit may continue to perform die cutting on the electrode-plate material based on a preset die cutting parameter until die cutting performed on the first electrode plate is completed, and then the die cutting unit performs die cutting on the second electrode plate on the electrode-plate material. The preset die cutting parameter corresponds to a die cutting parameter for a case in which no defect is detected in the electrode-plate material.

In some embodiments, as shown in FIG. 4 and FIG. 5, the third length threshold Lt3 is equal to a total length L0 of each electrode plate plus a distance Lc2 between the second defect detection position of the second visual detection unit 150 and a die cutting position of the die cutting unit 120 in the first direction minus a distance Ls between a preset position on the first electrode plate and an initial position of the first electrode plate in the first direction, that is, the third length threshold Lt3 satisfies Lt3=L0-Ls+Lc2.

In some embodiments, a fourth length threshold may be used as the preset length threshold when the electrode-plate material is a two-side electrode-plate material, and die cutting performed in two electrode-plate material regions of the electrode-plate material is only synchronously executable. The fourth length threshold may be determined based on a total length of each electrode plate, a distance between a preset position on the first electrode plate and an initial position of the first electrode plate in the first direction, and a distance between a second defect detection position of the second visual detection unit and a die cutting position of the die cutting unit in the first direction. For example, as shown in FIG. 5, the fourth length threshold Lt4 is equal to a half of the total length L0 of each electrode plate plus the distance Lc2 between the second defect detection position of the second visual detection unit 150 and the die cutting position of the die cutting unit in the first direction minus the distance Ls between the preset position on the first electrode plate and the initial position of the first electrode plate in the first direction, that is, Lt4=L0/2-Ls+Lc2. Because die cutting can only be synchronously performed on the two-side electrode-plate material, a waste of performing resetting and re-cutting in the electrode-plate material region in which no defect exists needs to be considered, to determine the corresponding preset length threshold, that is, the fourth length threshold Lt4.

In conclusion, it should be noted that the foregoing embodiments are for description of the technical solutions of the present application only rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. Especially, as long as there is no structural conflict, the various technical features mentioned in each embodiment can be combined in any way. The present application is not limited to the particular embodiments disclosed herein, but comprises all technical solutions that fall within the scope of the claims.

## Claims

1. A die cutting method for an electrode plate, wherein the die cutting method for an electrode plate comprises:
providing an electrode-plate material;
in a process in which a die cutting unit performs die cutting on the electrode-plate material to generate an electrode plate having a length of a single-battery cell electrode plate, a defect detection unit performs defect detection on the electrode-plate material, wherein the electrode plate having the length of the single-battery cell electrode plate is indicated by a mark obtained through die cutting performed on the electrode plate; and
in response to that the defect detection unit detects a defect in the electrode-plate material, ending, depending on a position of the detected defect on a first electrode plate on which die cutting is performed, die cutting performed on the first electrode plate, and restarting to perform die cutting on a second electrode plate.

2. The die cutting method for an electrode plate according to claim 1, wherein the in response to that the defect detection unit detects a defect in the electrode-plate material, ending, depending on a position of the detected defect on a first electrode plate on which die cutting is performed, die cutting performed on the first electrode plate, and restarting to perform die cutting on a second electrode plate comprises:
in response to that the defect detection unit detects the defect in the electrode-plate material, determining a first distance between the defect and a preset position on the first electrode plate in a first direction, wherein the first direction is a moving direction of the electrode-plate material during die cutting;
comparing the first distance with a preset length threshold; and
when the first distance is less than the preset length threshold, ending die cutting performed on the first electrode plate, and the die cutting unit performs die cutting on the second electrode plate on the electrode-plate material.

3. The die cutting method for an electrode plate according to claim 2, wherein the die cutting method for an electrode plate further comprises:
when the first distance is greater than or equal to the preset length threshold, an identification unit performs defective product identification on the first electrode plate.

4. The die cutting method for an electrode plate according to claim 2, wherein the die cutting method for an electrode plate further comprises:
when the first distance is greater than or equal to the preset length threshold, the die cutting unit continues to perform die cutting on the electrode-plate material based on a preset die cutting parameter, wherein the preset die cutting parameter corresponds to a die cutting parameter for a case in which no defect is detected in the electrode-plate material.

5. The die cutting method for an electrode plate according to claim 2, wherein the defect detection unit performs defect detection on the electrode-plate material based on shooting performed by a visual detection unit on the electrode-plate material, the visual detection unit comprises a first visual detection unit located in front of the die cutting unit in the first direction, and a first length threshold is used as the preset length threshold when the electrode-plate material is a single-side electrode-plate material in which a tab is obtained through die cutting on only one side perpendicular to the moving direction, wherein the first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction.

6. The die cutting method for an electrode plate according to claim 5, wherein the first length threshold is equal to the total length of each electrode plate minus the distance between the preset position on the first electrode plate and the initial position of the first electrode plate in the first direction minus the distance between the first defect detection position of the first visual detection unit and the die cutting position of the die cutting unit in the first direction.

7. The die cutting method for an electrode plate according to claim 2, wherein the defect detection unit performs defect detection on the electrode-plate material based on shooting performed by a visual detection unit on the electrode-plate material, the visual detection unit comprises a first visual detection unit located in front of the die cutting unit in the first direction, and when the electrode-plate material is a two-side electrode-plate material in which tabs are obtained through die cutting on both sides perpendicular to the moving direction, the die cutting method for an electrode plate further comprises:
in response to that the first visual detection unit detects the defect in the electrode-plate material, the defect detection unit determines an electrode-plate material region in which the defect is located in the electrode-plate material, wherein the electrode-plate material comprises two electrode-plate material regions, the two electrode-plate material regions are defined by a slitting line extending in the first direction in the electrode-plate material, and the two electrode-plate material regions are respectively configured to form different electrode plates; and
determining the preset length threshold based on the electrode-plate material region in which the defect is located in the electrode-plate material.

8. The die cutting method for an electrode plate according to claim 7, wherein the determining the preset length threshold based on the electrode-plate material region in which the defect is located in the electrode-plate material comprises:
using the first length threshold as the preset length threshold when the defect is distributed in the two electrode-plate material regions, wherein the first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction.

9. The die cutting method for an electrode plate according to claim 8, wherein the first length threshold is equal to the total length of each electrode plate minus the distance between the preset position on the first electrode plate and the initial position of the first electrode plate in the first direction minus the distance between the first defect detection position of the first visual detection unit and the die cutting position of the die cutting unit in the first direction.

10. The die cutting method for an electrode plate according to claim 8 or 9, wherein the die cutting unit comprises a first die cutting unit and a second die cutting unit, and the when the first distance is less than the preset length threshold, ending die cutting performed on the first electrode plate, and the die cutting unit performs die cutting on the second electrode plate on the electrode-plate material comprises:
ending, for both the two electrode-plate material regions, die cutting performed on the first electrode plate, and the first die cutting unit and the second die cutting unit respectively perform die cutting on corresponding second electrode plates.

11. The die cutting method for an electrode plate according to claim 7, wherein when die cutting performed in the two electrode-plate material regions of the electrode-plate material is asynchronously executable, the determining the preset length threshold based on the electrode-plate material region in which the defect is located in the electrode-plate material comprises:
using the first length threshold as the preset length threshold, wherein the first length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction.

12. The die cutting method for an electrode plate according to claim 11, wherein the first length threshold is equal to the total length of each electrode plate minus the distance between the preset position on the first electrode plate and the initial position of the first electrode plate in the first direction minus the distance between the first defect detection position of the first visual detection unit and the die cutting position of the die cutting unit in the first direction.

13. The die cutting method for an electrode plate according to claim 11 or 12, wherein the die cutting unit comprises a first die cutting unit and a second die cutting unit, and the when the first distance is less than the preset length threshold, ending die cutting performed on the first electrode plate, and the die cutting unit performs die cutting on the second electrode plate on the electrode-plate material comprises:
ending, in an electrode-plate material region in which the defects exists in the two electrode-plate material regions, die cutting performed on the first electrode plate, and one of the first die cutting unit and the second die cutting unit that is close to the electrode-plate material region performs die cutting on the second electrode plate in the electrode-plate material region; and
one of the first die cutting unit and the second die cutting unit that is close to another electrode-plate material region in which the defects does not exist in the two electrode-plate material regions continues to perform, in the another electrode-plate material region, die cutting based on a preset die cutting parameter, wherein the preset die cutting parameter corresponds to a die cutting parameter for a case in which no defect is detected in the electrode-plate material.

14. The die cutting method for an electrode plate according to claim 7, wherein when die cutting performed in the two electrode-plate material regions of the electrode-plate material is only synchronously executable, the determining the preset length threshold based on the electrode-plate material region in which the defect is located in the electrode-plate material comprises:
using a second length threshold as the preset length threshold when the defect is distributed in only one of the two electrode-plate material regions, wherein the second length threshold is determined based on a total length of each electrode plate, a distance between a preset position on the first electrode plate and an initial position of the first electrode plate in the first direction, and a distance between a first defect detection position of the first visual detection unit and a die cutting position of the die cutting unit in the first direction.

15. The die cutting method for an electrode plate according to claim 14, wherein the second length threshold is equal to a half of the total length of each electrode plate minus the distance between the preset position on the first electrode plate and the initial position of the first electrode plate in the first direction minus the distance between the first defect detection position of the first visual detection unit and the die cutting position of the die cutting unit in the first direction.

16. The die cutting method for an electrode plate according to claim 14 or 15, wherein the die cutting unit comprises a first die cutting unit and a second die cutting unit, and the when the first distance is less than the preset length threshold, ending die cutting performed on the first electrode plate, and the die cutting unit performs die cutting on the second electrode plate on the electrode-plate material comprises:
synchronously ending, for both the two electrode-plate material regions, die cutting performed on the first electrode plate, and the first die cutting unit and the second die cutting unit respectively perform die cutting on corresponding second electrode plates synchronously.

17. The die cutting method for an electrode plate according to claim 2, wherein the defect detection unit performs defect detection on the electrode-plate material based on shooting performed by a visual detection unit on the electrode-plate material, the visual detection unit comprises a second visual detection unit located behind the die cutting unit in the first direction, and a third length threshold is used as the preset length threshold when the electrode-plate material is a single-side electrode-plate material in which a tab is obtained through die cutting on only one side perpendicular to the moving direction, wherein when a final position of the first electrode plate on which die cutting is performed is not between the second visual detection unit and the die cutting unit when the defect is detected, the first distance is less than the third length threshold, and when the final position of the first electrode plate on which die cutting is performed is between the second visual detection unit and the die cutting unit when the defect is detected, the first distance is greater than or equal to the third length threshold.

18. The die cutting method for an electrode plate according to claim 2, wherein the defect detection unit performs defect detection on the electrode-plate material based on shooting performed by a visual detection unit on the electrode-plate material, the visual detection unit comprises a second visual detection unit located behind the die cutting unit in the first direction, and a third length threshold is used as the preset length threshold when the electrode-plate material is a two-side electrode-plate material in which tabs are obtained through die cutting on both sides perpendicular to the moving direction, and die cutting performed in two electrode-plate material regions of the electrode-plate material is asynchronously executable, wherein the electrode-plate material comprises the two electrode-plate material regions, the two electrode-plate material regions are defined by a slitting line extending in the first direction in the electrode-plate material, the two electrode-plate material regions are respectively configured to form different electrode plates, and when a final position of the first electrode plate on which die cutting is performed is not between the second visual detection unit and the die cutting unit when the defect is detected, the first distance is less than the third length threshold, and when the final position of the first electrode plate on which die cutting is performed is between the second visual detection unit and the die cutting unit when the defect is detected, the first distance is greater than or equal to the third length threshold.

19. The die cutting method for an electrode plate according to claim 17 or 18, wherein the third length threshold is equal to a total length of each electrode plate plus a distance between a second defect detection position of the second visual detection unit and a die cutting position of the die cutting unit in the first direction minus a distance between a preset position on the first electrode plate and an initial position of the first electrode plate in the first direction.

20. The die cutting method for an electrode plate according to claim 17 or 18, wherein the die cutting method for an electrode plate further comprises:
when the first distance is greater than or equal to the third length threshold, the die cutting unit continues to perform die cutting on the electrode-plate material based on a preset die cutting parameter until die cutting performed on the first electrode plate is completed, and then the die cutting unit performs die cutting on the second electrode plate on the electrode-plate material, wherein the preset die cutting parameter corresponds to a die cutting parameter for a case in which no defect is detected in the electrode-plate material.

21. The die cutting method for an electrode plate according to claim 2, wherein the defect detection unit performs defect detection on the electrode-plate material based on shooting performed by a visual detection unit on the electrode-plate material, the visual detection unit comprises a second visual detection unit located behind the die cutting unit in the first direction, and a fourth length threshold is used as the preset length threshold when the electrode-plate material is a two-side electrode-plate material in which tabs are obtained through die cutting on both sides perpendicular to the moving direction, and die cutting performed in two electrode-plate material regions of the electrode-plate material is only synchronously executable, wherein the electrode-plate material comprises the two electrode-plate material regions, the two electrode-plate material regions are defined by a slitting line extending in the first direction in the electrode-plate material, the two electrode-plate material regions are respectively configured to form different electrode plates, and the fourth length threshold is determined based on a total length of each electrode plate, a distance between a preset position on the first electrode plate and an initial position of the first electrode plate in the first direction, and a distance between a second defect detection position of the second visual detection unit and a die cutting position of the die cutting unit in the first direction.

22. The die cutting method for an electrode plate according to claim 21, wherein the fourth length threshold is equal to a half of the total length of each electrode plate plus the distance between the second defect detection position of the second visual detection unit and the die cutting position of the die cutting unit in the first direction minus the distance between the preset position on the first electrode plate and the initial position of the first electrode plate in the first direction.

23. A die cutting apparatus for an electrode plate, wherein the die cutting apparatus for an electrode plate comprises:
a visual detection unit, configured to shoot an electrode-plate material;
a defect detection unit, wherein the defect detection unit is communicatively connected to the visual detection unit, and the defect detection unit is configured to determine, based on an image shot by the visual detection unit, whether a defect exists in the electrode-plate material;
a die cutting unit, wherein the die cutting unit is communicatively connected to the defect detection unit, and the die cutting unit is configured to perform die cutting on an electrode plate; and
a control unit, wherein the control unit is communicatively connected to the defect detection unit and the die cutting unit, and the control unit is configured to: in response to that a defect is detected in the electrode-plate material, end, depending on a position of the detected defect on a first electrode plate on which die cutting is performed, die cutting performed on the first electrode plate, and restart to perform die cutting on a second electrode plate.

24. The die cutting apparatus for an electrode plate according to claim 23, wherein the die cutting apparatus for an electrode plate further comprises:
an identification unit, wherein the identification unit is communicatively connected to the defect detection unit and the control unit, the identification unit is located in front of the visual detection unit in a first direction, and the identification unit is configured to perform defective product identification on an electrode plate.

25. The die cutting apparatus for an electrode plate according to claim 23, wherein the visual detection unit comprises at least one of the followings:
a first visual detection unit, wherein the first visual detection unit is located in front of the die cutting unit in the first direction; and
a second visual detection unit, wherein the second visual detection unit is located behind the die cutting unit in the first direction.

26. The die cutting apparatus for an electrode plate according to claim 23, wherein the die cutting apparatus for an electrode plate further comprises:
a slitting unit, wherein the slitting unit is located in front of the visual detection unit in the first direction, and the slitting unit is configured to slit, along a slitting line extending in the first direction in the electrode-plate material, two electrode-plate material regions comprised in the electrode-plate material, wherein the two electrode-plate material regions are respectively configured to form different electrode plates.

27. The die cutting apparatus for an electrode plate according to claim 26, wherein the die cutting unit comprises:
a first die cutting unit; and
a second die cutting unit, wherein the first die cutting unit and the second die cutting unit are respectively located at two ends in a second direction perpendicular to the first direction.
